Europäisches Patentamt

European Patent Office

Office européen des brevets

(19)

(11) **EP 0 928 458 B1**

(12) **EUROPEAN PATENT SPECIFICATION**

(45) Date of publication and mention
of the grant of the patent:
**26.03.2003   Bulletin 2003/13**

(51) Int Cl.$^7$: **G06T 11/00**

(86) International application number:
**PCT/SE97/01188**

(21) Application number: **97933087.5**

(22) Date of filing: **01.07.1997**

(87) International publication number:
**WO 98/000063 (08.01.1998 Gazette 1998/01)**

(54) **A COMPUTER TOMOGRAPHIC METHOD AND A COMPUTER TOMOGRAPH**

EINE COMPUTERTOMOGRAPHISCHE METHODE UND EIN COMPUTERTOMOGRAPH

PROCEDE TOMODENSITOMETRIQUE ET TOMODENSITOMETRE

(84) Designated Contracting States:
**DE FR GB NL**

(30) Priority:  **01.07.1996  SE 9602594**

(43) Date of publication of application:
**14.07.1999   Bulletin 1999/28**

(73) Proprietor: **Nilsson, Stefan**
**590 52 Nykil (SE)**

(72) Inventor: **Nilsson, Stefan**
**590 52 Nykil (SE)**

(74) Representative: **Grennberg, Erik Bertil**
**Albihns Stockholm AB,**
**Box 5581**
**114 85 Stockholm (SE)**

(56) References cited:
**US-A- 4 482 958          US-A- 5 253 171**

• **IEEE TRANSACTIONS ON MEDICAL IMAGES,**
**Volume 12, No. 3, 1993, G.T. HERMAN et al.,**
**"Reconstruction Techniques Can Be Made**
**Computationally Efficient".**

**Description**

Introduction

The present invention regards computer tomography and methods of evaluating tomography data. The method of the invention can be applied to all kinds of tomographic imaging, whether registered by X-ray or radioactive absorption, by magnetic resonance (MR) or positron emission tomography (PET). In all those cases are obtained experimental values in the form of line integrals along multitudes of straight lines. The typical CT measurement consists of mounting an X-ray tube on a rotatable circular ring and a set of detectors in a row opposite the tube.

The invention therefore regards a computer tomography method for obtaining a mapping of a variable in an object, said variable being measured in the form of line integral values over a multitude of lines, crossing said object, the multitude of measured lines being subdivided into families of lines, which families are enumerable in an order determined by successive relative angular shifts between patterns of lines in successive families.

In computerized tomographic imaging (CT) the inverse problem consists of determining a function from its line integrals. We examine three different types of measured data sets. with different scanning geometries. namely two versions of parallel scanning (sinogram. linogram) and fan-beam scanning (even cone-beam scanning). We will study the Filtered Backprojection Method (FBM) which is one of the most well-known and widely used methods. The reason for the wide use of the filtered backprojection algorithm is the high image quality.

A serious problem in prior art evaluation of tomographic data in order to obtain an image is the heavy computational complexity for the back-projection operator, which is of the order $N^3$. It is the general object of the invention to obtain an improved method of transforming tomographic data into images, which is less complex and can give improvement either in computational speed or in an increased number of voxels/pixels in an image.

This object and other objects and advantages are obtained, according to the invention. by means of a computer tomography method of the kind recited, which is characterized by the steps recited in claim 1. Advantageous embodiments are recited in dependent claims.

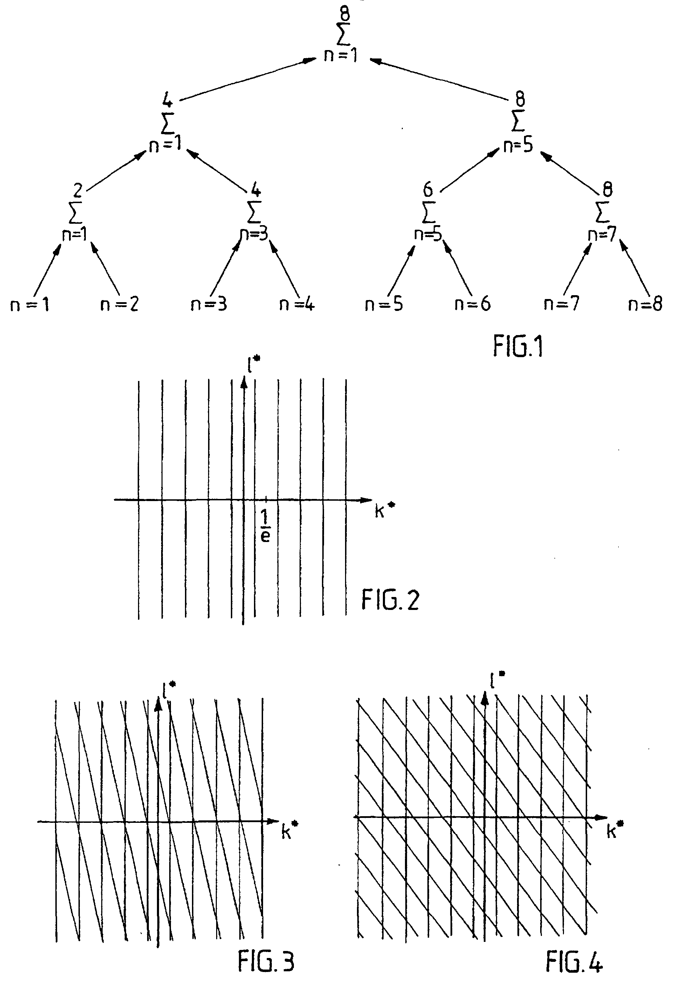

In conventional backprojection each pixel value is calculated separately, which means that $O(N)$ operations are required for each pixel. Then the total number of operations will be of the order $O(N^3)$. Instead of directly doing the $N^3$ additions the basic idea behind the new algorithm is to divide the summation into partial sums, which then are used to form new partial sums in a dyadic and hierarchial way, see Figure 1. The reason for this procedure is the benefit in computational reduction due to the fact that a partial sum has approximately the same value for many neighbouring points. Thus each value of a partial sum is calculated once, but used several times when forming a new partial sum from two partial sums in a preceding level of the hierarchy.

US-A-4,482,958 discloses an apparatus for processing data from a number of projections of a computer tomography system. The apparatus includes a processor for dividing the image matrix data into data groups and for respectively calculating partial sums of the data groups. The apparatus includes a further processor for sequentially accumulating the partial sums to calculate the total sum of the matrix data. This arrangement improves the accumulation speed and thus the speed of the image generation.

Although in the present description, the invention is exemplified with forming hierachial partial sums in a dyadic way, which is presently believed to be the best mode, it is also possible to sum more than two groups, namely, each time a number which is a prime number. It is even not necessary to use the same prime number in each stage.

In a preferred embodiment, families of lines are combined two and two, indicating that the total number of line families is a power of two. With a number of pixels/voxels of 512 x 512 and an equal number of families, i.e. angles of registration, this condition is fulfilled. However, without using the full advantages of the invention, it is possible in the partial sum calculation to combine three (or five, or any prime number) space distributions by making sums for those points where the lines for the largest angular difference intersect, and adding interpolation values for the further distributions.

It is also possible to add line integrals for intermediate lines, for which no measurement was made, i.e. by setting intermediate (non-measured) line integrals to the mean value of the adjacent lines, for which a measurement was made.

Although the method is most easily understood for a case where all the line families belong to the same plane, which is the most common configuration in practice, and which is exemplified as the fan-type, the sinogram and the linogram, it may also be adapted to the cone-beam case, where radiation from a source fills a cone, and detection is made in a two-dimensional array of detectors. Each detector then corresponds to a line through the field swept, and the contraption and the object are mutually rotated. As shall be shown, a considerable saving in calculations may be obtained also in this case.

In a special case, where each family of lines consists of lines which are mutually parallel, it is possible, in a very favourable way, to obtain values for points which are equidistant in a rectangular screen pattern. This is obtained by making the two last line families, for which sums at intersections are calculated. be at mutually right angles. Thereby, in principle, the last repeated second step is performed by two combined groups, symmetrized in relation to a direction at right angles to an angle belonging to a family of lines which is at an extreme end of said enumerable order, thus obtaining a set of sum values which correspond to pixels in a cartesian system of screen pattern.

List of Figures

Figure 1:    The summation process for $N = 8$.

Figure 2:    Division of the $(k^*, l^*)$-plane for $l^*(0, i, k^*, l^*)$.

Figure 3:    Division of the $(k^*, l^*)$-plane for $l^*(1, i, k^*, l^*)$.

Figure 4:    Division of the $(k^*, l^*)$-plane for $l^*(j, i, k^*, l^*)$,

Figure 5:    Cone-beam geometry.

Figure 6:    Points of intersection for the partial sum $l(j, i, k, l, m)$.

2 The filtered backprojection algorithm for sinogram

In the parallel scanning geometry a cross-section of the human body is scanned by a set of equally spaced parallel X-ray beams for a number of equally distributed directions. Thus the recorded detector values correspond to a discrete set of values from the Radon transform. The (n-dimensional) Radon transform of a function $f$ on $R^n$ is defined by

$$(Rf)(\theta, s) = \int_{X \cdot \theta = s} f(X)\, dX,$$

which is the integral of $f$ over the hyperplane whose normal is $\theta \in S^{n-1}$, the unit sphere in $R^n$, and with (signed) distance $s \in R^1$ from the origin. The term sinogram is chosen since an attenuation function consisting of a $\delta$-function, Dirac function, gives a Radon transform supported on a sinusoid in parameter space, *i.e.*, $(\theta, s)$-space.

Before giving the inversion formula we will describe the backprojection.
The (n-dimensional) backprojection operator $R^{\#}$ maps a function $g$ on $S^{n-1} \times R^1$ into the set of functions on $R^n$. The backprojection operator is defined by

$$(R^{\#}g)(X) = \int_{S^{n-1}} g(\theta, X \cdot \theta)\, d\theta, \ X \in R^n.$$

$R$ is the dual operator of $R$. Hence

$$\int_{S^{n-1}} \int_{R^1} (Rf)(\theta, s)\, g(\theta, s)\, ds\, d\theta = \int_{R^n} f(X)(R^{\#}g)(X)\, dX.$$

The filtered backprojection algorithm is a numerical implementation of the inversion formula

$$f = \frac{1}{2}(2\pi)^{1-n} R^{\#} H^{n-1} (Rf)^{(n-1)},$$

where $H$ denotes the Hilbert transform and $(\cdot)^{(n-1)}$ denotes the (n-1)st derivative both with respect to the variable s.

3 Fast backprojection for sinogram

In this section we will develop a method for backprojection. requiring only $O(N^2 \log N)$ operations. This method can be used on the ($n$-dimensional) backprojection operator but in order to describe the main idea it suffices to study the case $n = 2$. Then

$$(Rg)(X) = \int_{S^1} g(\theta, X \cdot \theta)\, d\theta,$$

where

$$X = \begin{pmatrix} x \\ y \end{pmatrix} \in R^2 \text{ and } \theta = \begin{pmatrix} \cos v \\ \sin v \end{pmatrix} \in S^1,$$

or, with slightly different notation,

$$\left( R^{\sharp} g \right)(x, y) = \int_0^{2\pi} g(v, x \cos v + y \sin v)\, dv.$$

Strictly we should write $g(\theta(v), x \cos v + y \sin v)$. We assume that $g(\theta, s)$ satisfies the condition $g(-\theta, -s) = g(\theta, s)$ which implies that $g(v + \pi, -s) = g(v,s)$. Then

$$\left( R^{\sharp} g \right)(x, y) = 2 \int_0^{\pi} g(v, x \cos v + y \sin v)\, dv.$$

Let $g(v, s)$ be sampled at the points $g(v_m, s_n)$ where

$$\begin{cases} v_m = m\frac{\pi}{N} & m = 0, \ldots, N - 1 \\[2mm] s_n = n\frac{2}{N} & n = -\frac{N}{2}, \ldots, \frac{N}{2} \end{cases}$$

$N = 2^J$, $J$ positive integer. In order to compute the backprojection, we need to calculate the sums

$$\left( R^{\sharp} g \right)\left( \frac{2k}{N}, \frac{2l}{N} \right) \approx \frac{2\pi}{N} \sum_{m=0}^{N-1} g\left( v_m, \frac{2}{N}(k \cos v_m + l \sin v_m) \right), \qquad (3.1)$$

for $k^2 + l^2 \leq \frac{N^2}{4}$, where $k$ and $l$ are integers.

Since $g$ is defined on a rectangular grid we might use linear interpolation for the variable s in the sum of formula 3.1. We choose instead the following procedure.

First extend the definition of $g$ by increasing the number of sampling points in the $s$-coordinate with a factor $e$, using linear interpolation, and introduce the notation

$$G(m, n) = g\left( \frac{m\pi}{N}, \frac{2n}{eN} \right)$$

for $m = 0, ..., N - 1$ and $n = -\frac{eN}{2}, ..., \frac{eN}{2}$. Then, take

$$\left(R^{\sharp}g\right)\left(\frac{2k}{N},\frac{2l}{N}\right) \approx \frac{2\pi}{N}\sum_{m=0}^{N-1} G(m, [e(k\cos v_m + l\sin v_m)]).,$$

where [a] denotes a rounded to the nearest integer.

Now, instead of directly doing the $N^3$ additions we will divide the summation into partial sums, which then are used to form new partial sums in a hierarcoial way. The reason for this procedure is the benefit in computational reduction, due to the fact that a partial sum has the same value for many neighbouring points. First we define

$$I(j, i, k, l) = \sum_{m=(i-1)\cdot 2^j}^{i\cdot 2^j - 1} G(m, [e(k\cos v_m \div l\sin v_m)])$$

for $0 \le j \le J$, $1 \le i \le 2^{J-j}$. Then we have the following simple relation

$$I(j,i,k,l) = I(j - 1, 2i - 1, k, l) + I(j - 1, 2i, k, l).$$

In the following description we will show that the number of points $(k, l)$ where the value of the partial sum $I(j, i, k, l)$ has to be calculated is approximately twice as large as the number of points where the value of a partial sum $I(j - 1, i, k, l)$ has to be calculated. Hence, since the number of partial sums with different $i$-values at level $j$ is $N/2^j$, the total number of summation points for all partial sums at level $j$ is approximately the same as for level $j - 1$ and since there are $J = 2 \log N$ $j$-levels we conclude that the total number of operations for all levels will be proportional to $N^2 \log N$.

The variable $i$ just stands for a rotation about the origin. Thus it will be convenient to make the following definition

$$I^*(j, i, k^*, l^*) = \sum_{m=0}^{2^j-1} G(m \div (i-1)\cdot 2^j, [e(k^*\cos v_m + l^*\sin v_m)]).$$

Then we have

$$I(j,i,k,l)$$

$$= I^*(j,i,k\cos v_{(i-1)2^j} + l\sin v_{(i-1)2^j}, l\cos v_{(i-1)2^j} - k\sin v_{(i-1)2^j}) \qquad (3.2)$$

and

$$I^*(j,i,k^*,l^*) = I^*(j - 1,2i - 1,k^*,l^*)$$

$$+ I^*(j - 1,2i,k^*\cos v_{2^{j-1}} + l^*\sin v_{2^{j-1}}, l^*\cos v_{2^{j-1}} - k^*\sin v_{2^{j-1}}). \qquad (3.3)$$

By definition we have

$$I^*(0,i,k^*,l^*) = G(i - 1, [ek^*]).$$

We now see that $I^*(0,i,k^*_1,l^*_1) = I^*(0,i.k^*_2,l^*_2)$ if the points $(k^*_1,l^*_1)$ and $(k^*_2,l^*_2)$ are located in the same strip, see Figure 2.

Now consider the next level, $j=1$. We have

$$l^*(1, i, k^*, l^*) = G(2i - 2, [ek^*]) + G(2i - 1, [e(k^* \cos v_1 + l^* \sin v_1)]),$$

and we conclude that $l^*(1,i,k^*_1,l^*_1) = l^*(1,i,k^*_2,l^*_2)$ if $(k^*_1,l^*_1)$ and $(k^*_2, l^*_2)$ are located in the same region, see Figure 3. Let

$$k^* = \frac{a}{e}$$

$$k^* \cos v_1 + l^* \sin v_1 = \frac{b}{e}$$

According to Figure 3 it will be necessary to calculate $l^*(1, i, k^*, l^*)$ only for $a$ and $b$ integers. Therefore we introduce, in general $k^*$ and $l^*$ will not be integers.

$$\bar{l}(1,i,a,b) = l^*(1,i,k^*,l^*)$$

where

$$\begin{cases} a = ek^* \\ b = e(k^* \cos v_1 + l^* \sin v_1) \ . \end{cases}$$

Hence

$$\bar{l}(1,i,a,b) = G(2i - 2,a) + G(2i - 1, b)$$

Can we do a similar division of the $(k^*,l^*)$-plane for $l^*(j,i,k^*,l^*)$, $j > 1$? Let

$$k^* = \frac{a}{e}$$

$$k^* \cos v_{2^j-1} + l^* \sin v_{2^j-1} = \frac{b}{e}$$

If two points $(k^*_1, l^*_1)$ and $(k^*_2, l^*_2)$ are in the same region. see Figure 4, we want $l^*(j,i,k^*_1,l^*_1) = l^*(j,i,k^*_2,l^*_2)$, i.e.

$$|(k^*_1 - k^*_2)\cos v_m + (l^*_1 - l^*_2) \sin v_m| \le \frac{1}{e} \tag{3.4}$$

for $m = 0, ..., 2^j - 1$. In Figure 4 we see that all regions approximately satisfy condition (3.4) if $v_{2^j-1} \le \frac{\pi}{2}$, which corresponds to $j \le J - 1$. In the same way as for $j=1$ we introduce

$$\bar{l}(j,i,a,b) = l^*(j,i,k^*,l^*) \tag{3.5}$$

where

$$\begin{cases} a = ek^* \\ b = e(k^* \cos v_{2^j-1} + l^* \sin v_{2^j-1}) \end{cases}$$

By equations (3.3) and (3.5) we see that we have the following relation

$$\bar{I}(j,i,a,b) \approx \bar{I}(j-1, 2i-1, a, b_1) + \bar{I}(j-1, 2i, a_1, b) \qquad (3.6)$$

where

$$a_1 = a\frac{\sin v_{2^{j-1}-1}}{\sin v_{2^j-1}} + b\frac{\sin v_{2^{j-1}}}{\sin v_{2^j-1}} \qquad (3.7)$$

and

$$b_1 = a\frac{\sin v_{2^{j-1}}}{\sin v_{2^j-1}} + b\frac{\sin v_{2^{j-1}-1}}{\sin v_{2^j-1}}, \qquad (3.8)$$

By symmetry we have

$$\bar{I}(j,i,b,a) \approx \bar{I}(j-1, 2i-1, b, a_1) + \bar{I}(j-1, 2i, b_1, a)$$

$$\bar{I}(j, i, -a, -b) \approx \bar{I}(j-1, 2i-1, -a, -b_1) + \bar{I}(j-1, 2i, -a_1, -b)$$

and

$$\bar{I}(j,i,a,a) \approx \bar{I}(j-1, 2i-1, a, a_1) + \bar{I}(j-1, 2i, a_1, a)$$

where

$$a_1 = a\frac{\sin v_{2^{j-1}-1} + \sin v_{2^{j-1}}}{\sin v_{2^j-1}}.$$

which means that we only have to compute $a_1$ and $b_1$ for $0 \le a \le |b|$.

The procedure suggested by this discussion of the partial sums leads to the following algorithm. We start by adding "extra" sample values by linear interpolation. Then we form partial sums of adjacent pairwise projections ( A projection $m$ consists of all sample points $G(m, n)$ where $m$ is fixed. ). The next step will be to form partial sums of four projections by adding two adjacent sums from the previous step. Thereafter we will subsequently form partial sums of 8,16,32,...projections. The iteration stops when full backprojection is obtained, that is, when the sum consists of all projections. A partial sum is only determined in points where two lines intersect whose angles are $v_0$ and $v_{2i-1}$, with respect to the $(k^*,l^*)$-plane, and whose perpendicular distances to the origin are $\frac{2n_1}{eN}$ and $\frac{2n_2}{eN}$ respectively, $n_1$ and $n_2$ integers. If $e \ge 2$ the process is stopped before we obtain $\bar{I}(J-1,i,a,b)$. If the total number of points where the partial sums, at level $j$, are calculated is of the same order as the number of pixels, the process is stopped and the pixels are interpolated directly from the values of the partial sums at level $j-1$. The pixel values are then calculated from equation (3.2). When $e = 1$ we calculate all the partial sums up to $\bar{I}(J-1, i, a, b)$. Although the number of points where $\bar{I}(J-1, i, a, b)$ is calculated is of the same order as the number of pixels they do not coincide. This is caused by $v_{2i-1} = \frac{\pi}{2} - \frac{\pi}{N}$ $\ne \frac{\pi}{2}$. Therefore we have to calculate the pixel values by equation (3.2) which is unnecessary if we instead do the following. We want to calculate

$$\sum_{m=0}^{N/2} G(m, [k\cos v_m + l\sin v_m]) \qquad (3.9)$$

and

$$\sum_{m=N/2}^{N} G(m. [k \cos v_m + l \sin v_m]). \qquad (3.10)$$

But now $v_{N/2} - v_0 = v_N - v_{N/2} = \frac{\pi}{2}$ so the points where we calculate the sums are in fact the pixels. One problem is that each sum, (3.9) and (3.10), consist of $2^{J-1} + 1$ elements. However in order for the summation process to work. the number of elements in a sum has to be a power of two. Therefore we calculate

$$e \sum_{m=0}^{N/4-1}, \sum_{m=N/4+1}^{N/2}, \sum_{m=N/2}^{3N/4-1} \text{ and } \sum_{m=3N/4+1}^{N}.$$

Then

$$\sum_{m=0}^{N/2} G(m, [k \cos v_m + l \sin v_m]) = \sum_{m=0}^{N/4-1} + \sum_{m=N/4+1}^{N/2} \div G\left(\frac{N}{4}, \left[\frac{k+l}{\sqrt{2}}\right]\right)$$

and

$$\sum_{m=N/2}^{N} G(m, [k \cos v_m + l \sin v_m]) = \sum_{m=N/2}^{3N/4-1} \div \sum_{m=3N/4+1}^{N} + G\left(\frac{3N}{4}, \left[\frac{l-k}{\sqrt{2}}\right]\right).$$

Note that since the partial sums

$$\sum_{m=0}^{N/2} \text{ and } \sum_{m=N/2}^{N}$$

both contain the projection $m = N/2$ and the projection $m = 0 \sim m = N$, we do the following. We assign the projections the values $G(N/2, n) \equiv 0$ and $G(0, n) \equiv 0$ in one of the partial sums. The total number of different values for

$$\frac{k+l}{\sqrt{2}} \text{ or } \frac{l-k}{\sqrt{2}}, k^2 + l^2 \le \frac{N^2}{4}$$

is $\approx N\sqrt{2}$.

If $j$ and $i$ are fixed then the number of points where we calculate $\bar{l}(j, i, a, b)$ is approximately the area of the circle, $\frac{\pi N^2}{4}$, divided by the area of one region (rhomb),

$$\frac{1}{e^2 \sin v_{2^j-1}},$$

i.e.,

$$e \frac{2\pi N^2}{4} \sin v_{2^j-1}.$$

Hence the total number of points at level $j$, $1 \le i \le \frac{N}{2^j}$, will be

$$e \frac{2\pi N^3}{4\,2^j} \sin v_{2^j-1} < e \frac{2\pi N^3}{4\,2^j} \sin v_{2^j-1} = e \frac{2\pi^2 N^2}{4} \frac{2^j-1}{2^j}.$$

When $j$ is small, ($j$=1, 2, 3.), the overlapping of the circle by rhombs is not so efficient but then $\frac{2^j-1}{2^j} = \frac{1}{2}, \frac{3}{4}, \frac{7}{8}$. Hence the total number of points for all levels is

$$< \frac{e^2 \pi^2}{4} N^2 \log N + N^2(e - 1)$$

for $e \geq 2$ and

$$< \frac{\pi^2}{4} N^2 \log N$$

for $e = 1$.

4 The filtered backprojection algorithm for linogram

In 1987 a new reconstruction algorithm was described in P.R. Edholm. G.T. Herman, *Linograms in image reconstruction from projections*, IEEE Transactions on medical imaging, Vol. MI-6, pp.301-307, 1987. It is called the linogram method and is similar to the direct Fourier method but it is based on a different scanning geometry. In the parallel scanning geometry for sinogram, the projection lines. X-rays, are taken for a number of equally distributed directions which requires the detectors to rotate around the object. The linogram projections actually consist of two sets of projections. In the first linogram the detectors and the transmitters lie equally spaced on fixed lines parallel to the $x$-axis and the projection angles are -45° $\leq \theta \leq$ 45°. Instead of equally distributed directions, $\Delta\theta$=constant, we now get $\Delta \tan \theta$=constant. In the second linogram the detectors and transmitters lie equally spaced on fixed lines parallel to the $y$-axis and 45° $\leq \theta \leq$ 135°,($\Delta$ cot $\theta$=constant).
Instead of the Radon transform it now will be natural to study the two linogram operators $R_1$ and $R_2$.

$$(R_1 f)(u, v) = \int_{-\infty}^{\infty} f(u - vy, y)\, dy$$

and

$$(R_2 f)(u, v) = \int_{-\infty}^{\infty} f(x, u + vx)\, dx.$$

The term linogram is chosen since an attenuation function consisting of a $\delta$-function gives a $R_1$- and $R_2$-transform supported on a line in parameter space, *i.e.*, ($u,v$)-space.
There exist dual operators, backprojection operators, $R_1$ and $R_2$ given by

$$\left(R_1^\sharp g\right)(x, y) = \int_{-1}^{1} g(x + vy, v)\, dv$$

and

$$\left(R_2^\sharp g\right)(x, y) = \int_{-1}^{1} g(y - vx, v)\, dv.$$

We have

$$\int_{-1}^{1} \int_{-\infty}^{\infty} (R_1 f)(u,v) g(u,v) \, du \, dv = \int_{-\infty}^{\infty} \int_{-\infty}^{\infty} f(x,y) \left( R_1^t g \right)(x,y) \, dx \, dy$$

and

$$\int_{-1}^{1} \int_{-\infty}^{\infty} (R_2 f)(u,v) g(u,v) \, du \, dv = \int_{-\infty}^{\infty} \int_{-\infty}^{\infty} f(x,y) \left( R_2^t g \right)(x,y) \, dx \, dy.$$

The filtered backprojection algorithm for linogram is a numerical implementation of the inversion formula

$$f = \frac{1}{2\pi} R_1 H (R_1 f)^{(1)} + \frac{1}{2\pi} R_2 H (R_2 f)^{(1)},$$

where $H$ denotes the Hilbert transform and $(\cdot)^{(1)}$ denotes the derivative both with respect to the variable $u$.

5 Fast backprojection for linogram

Here the procedure of summation for the backprojection is analogous to the one used for sinogram. It suffices to study the backprojection $R_1$ and projection data from $R_1$ since $R_2$ and $R_2$ corresponds to a rotation about the origin of 90° degrees. We want to determine

$$\left( R_1^t g \right)(x,y)$$

in the pixels

$$(x,y) = \left( \frac{2k}{N}, \frac{2l}{N} \right),$$

$N = 2^J$ where $J$ is a positive integer and $k$, $l$ integers belonging co the disk $k^2 + l^2 \leq \frac{N^2}{4}$. Then the function $g(u,v)$ has to be sampled in the points $g(u_m, v_n)$, $v_n = n\frac{2}{N}$ $n = -\frac{N}{2}, ..., \frac{N}{2}$ and $u_m = m\frac{2}{N}$, $m$ integer, for all $g(u_m, v_n)$ where the corresponding projection line intersect the unit circle. Therefore the number of parallel projection lines depends on the projection angle. For instance if $n = 0$ we have $|m| \leq \frac{N}{2}$ but if $n = \frac{N}{2}$ we have $|m| \leq \sqrt{2}\frac{N}{2}$. We will divide the summation.

$$\left( R_1^t g \right) \left( \frac{2k}{N}, \frac{2l}{N} \right) \approx \frac{2}{N} \sum_{n=-N/2}^{N/2} g \left( \frac{2}{N}(k + v_n \cdot l), v_n \right),$$

into partial sums in the same way as we did for sinogram. In order for the summation process to work, the number of elements in a sum has to be a power of two. Therefore we start by splitting the summation in the following way.

$$\frac{N}{2} \left( R_1^t g \right) \left( \frac{2k}{N}, \frac{2l}{N} \right) \approx \sum_{n=1}^{N/2} g \left( \frac{2}{N}(k + v_n \cdot l), v_n \right)$$

$$+ \sum_{n=-N/2}^{-1} g \left( \frac{2}{N}(k + v_n \cdot l), v_n \right) + g \left( \frac{2k}{N}, 0 \right).$$

$$(5.11)$$

Then we divide the sum

$$\sum_{n=1}^{N/2}$$

into partial sums ( The procedure for

$$\sum_{n=-N/2}^{-1}$$

is similar ). Define

$$I(j, i, k, l) = \sum_{n=(i-1) \cdot 2^j+1}^{i \cdot 2^j} g\left(\frac{2}{N}(k + v_n \cdot l), v_n\right),$$

for $0 \leq j \leq J-1$, $1 \leq i \leq 2^{J-j-1}$. The procedure suggested by this discussion of the partial sums is analogous to the method described in section 3 on page 8. A partial sum $I(j, i, k, l)$ is only determined in points where two projection lines intersect. one projection line corresponds to $v_{(i-1) \cdot 2^j+1}$ and the other to $v_{1 \cdot 2^j}$. If the projection line. which corresponds to $(u_a, v_{(i-1) \cdot 2^j+1})$, intersects the projection line. which corresponds to $(u_b, v_{i \cdot 2^j})$, at the point $(k_{j,i,a,b}, l_{j,i,a,b})$ in the $(k, l)$-plane we will use the notation

$$\bar{I}(j, i, a, b) = I(j, i, k_{j,i,a,b}, l_{j,i,a,b}).$$

The projection line $x = u_m - v_n \cdot y$ is the straight line through the points $(m + n, -N/2)$ and $(m - n, N/2)$ in the $(k, l)$-plane. We have

$$\begin{cases} k_{j,i,a,b} = a \cdot \dfrac{i \cdot 2^j}{2^j-1} - b \cdot \dfrac{(i-1) \cdot 2^j+1}{2^j-1} \\[4mm] l_{j,i,a,b} = \dfrac{N}{2} \cdot \dfrac{b-a}{2^j-1} \end{cases} .$$

Since we only are interested in points on the disc $k^2 + l^2 \leq \dfrac{N^2}{4}$ we get

$$|b - a| \leq 2^j - 1.$$

We obtain a similar relation for linogram as relation (3.6) for sinogram. We have

$$\bar{I}(j,i,a,b) \approx \bar{I}(j - 1, 2i - 1, a, b_1) + \bar{I}(j - 1, 2i. a_1, b)$$

where

$$a_1 = \frac{2^{j-1} - 1}{2^j - 1} \cdot a + \frac{2^{j-1}}{2^j-1} \cdot b = a + \frac{2^{j-1}}{2^j-1} \cdot (b - a)$$

and

$$b_1 = \frac{2^{j-1}}{2^j - 1} \cdot a + \frac{2^{j-1} - 1}{2^j - 1} \cdot b = a + \frac{2^{j-1} - 1}{2^j - 1} \cdot (b - a).$$

One major advantage of linogram compared to sinogram is that in the equations for $a_1$ and $b_1$ the terms which not are integers depend only on the difference $b - a$. Then if we use linear interpolation the interpolation factors will be constant if $\bar{b} = b - a$ =constant. Hence if we introduce the notation

$$\bar{l}(j,i,a,\bar{b}) = \bar{l}(j,i,a,a + \bar{b})$$

we finally obtain the simple and very effective summation algorithm

$$\bar{l}(j,i,a,\bar{b})$$

$$\approx (1 - c)\bar{l}(j - 1,2i - 1,a,\bar{b} - \bar{A}) + c\bar{l}(j - 1,2i - 1,a,b - \bar{A} - 1)$$

$$+(1 - c)\bar{l}(j - 1,2i,a + \bar{A},\bar{b} - \bar{A}) + c\bar{l}(j - 1,2i,a + \bar{A} + 1,\bar{b} - \bar{A} - 1)$$

where

$$\bar{b} \cdot \frac{2^{j-1}}{2^j - 1} = \bar{A} + c.$$

$\bar{A}$ integer and $0 < c < 1$. Since c = 0 for $\bar{b}$ = 0. $\pm(2^j\text{-}1)$ and by using that we have the same interpolation factors for $\pm\bar{b}$, we only have to compute

$$\bar{b} \cdot \frac{2^{j-1}}{2^j - 1}$$

for $1 \leq \bar{b} \leq 2^j - 2$ ( Let $1 \leq \bar{b} \leq 2^j\text{-}2$ and

$$\bar{b} \cdot \frac{2^{j-1}}{2^j - 1} = \bar{A} + c,$$

$\bar{A}$ integer and $0 < c < 1$. Then

$$-\bar{b} \cdot \frac{2^{j-1}}{2^j - 1} = -\bar{A} - 1 + (1 - c).$$

For sinogram, however, we had to compute $a_1$ and $b_1$ for all combinations of ($a$, $b$), $a \geq b$. Therefore the total number of times $a_1$ and $b_1$ have to be computed, at level $j$, is approximately $2(2^j - 1)N$ for sinogram. Hence although the number of summation points ($a. b$) is approximately the same for linograrn and sinogram the total computational complexity for $a_1$ and $b_1$ is $O(N)$ for linogram but $O(N^2)$ for sinogram.

Finally we calculate $R_1g$ according to equation (5.11). Let

$$\bar{l1}(a, \bar{b}) = \bar{l}(J - 1,1,a,\bar{b})$$

and $\bar{l2}(a, \bar{b})$ for the corresponding partial sum

$$\frac{2}{N}\sum_{n=1}^{N/2} g\left(\frac{2}{N}(k+v_{-n}\cdot l).v_{-n}\right),$$

where a corresponds to the direction $v_{-1}$ and $b = a + \bar{b}$ corresponds to the direction $v_{-N/2}$. Then

$$\frac{N}{2}\left(R_1^1 g\right)\left(\frac{2k}{N},\pm\frac{2l}{N}\right) \approx \left(1-\frac{2l}{N}\right)\overline{I1}(k,\pm l) + \frac{2l}{N}\overline{I1}(k\pm 1,\pm(i-1))$$

$$+ \left(1-\frac{2l}{N}\right)\overline{I2}(k,\mp l) + \frac{2l}{N}\overline{I2}(k\mp 1,\mp(l-1)) + g\left(\frac{2k}{N},0\right),$$

for $0 \le l \le N/2$.

The total computational complexity for the filtered fast backprojection algorithm for the linogram geometry is the same as for the sinogram geometry, *i.e.*, $N^2 \log N$.

6 Cone-beam and Fan-beam geometry

The most common scanning geometries in medical tomography are the cone-beam geometry in the three-dimensional case. and the analogous fan-beam geometry in the two-dimensional case. In cone-beam scanning an *X*-ray source is rotating around the object along a circle while emitting cones of *X*-rays, which are recorded by a two-dimensional detector. In fan-beam scanning the cone-beams are screened off to a single plane and consequently recorded by a one-dimensional detector.

L.A. Feldkamp, L.C. Davis, J.W. Kress, *Practical* cone *beam algorithms* Journal of optical soc. Am., Vol. A6, pp.612-619, 1984 disclose an approximate 3D-reconstruction algorithm for cone-beam projections. The computational complexity is of the order $O(N^4)$ for an image $f$ of $N \times N \times N \times$ pixels. By using the same technique as we did for the previous backprojection algorithms we will reduce the number of operations to $O(N^3 \log N)$. Next we will describe the cone-beam geometry. Let the position of the *X*-ray source be denoted by $\bar{S}(\lambda)$,

$$\bar{S}(\lambda) = \begin{pmatrix} r\cos\lambda \\ r\sin\lambda \\ 0 \end{pmatrix} \in R^3,$$

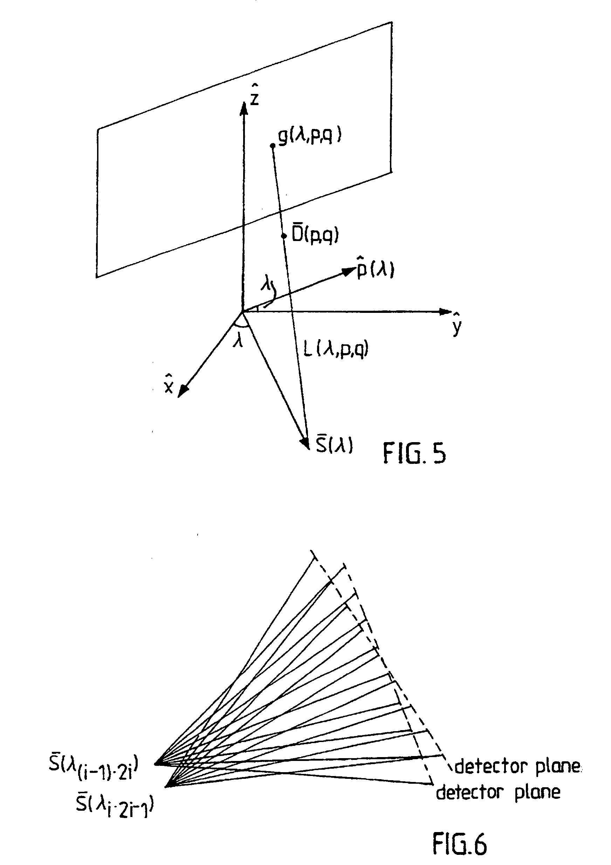

where $0 \le \lambda < 2\pi$ and $r$ constant. Hence the *X*-ray source rotates around the object along a circle in the *xy*-plane. The detector plane is always perpendicular to the vector $\bar{S}(\lambda)$, see Figure 5. Hence it will be practical to introduce the plane spanned by the normed vectors $p(\lambda)$ and $z$, where $p(\lambda)$ is the vector in the *xy*-plane which is perpendicular to $\bar{S}(\lambda)$, see Figure 5.

Then the measured data can be represented by a discrete set of values from

$$g(\lambda,p,q) = \int_{L(\lambda,p,q)} f(\bar{x})\,d\bar{x}.$$

where $L(\lambda. p, q)$ is the straight line through the points $\bar{S}(\lambda)$ and $\bar{D}(p, q) = p\hat{p}(\lambda) + q\hat{z}$. Now the approximate inversion formula can be written as

$$f(\bar{x}) = \frac{1}{4\pi^2} \int_0^{2\pi} A(\lambda, \bar{x})^2 G(\lambda, A(\lambda, \bar{x})\bar{x} \cdot \hat{p}(\lambda), A(\lambda, \bar{x})z)\, d\lambda, \qquad (6.12)$$

where

$$A(\lambda, \bar{x}) = \frac{r^2}{r^2 - \bar{x} \cdot \bar{S}(\lambda)}$$

and

$$G(\lambda, p, q) = \left( |\sigma| \left( \frac{r}{|\bar{S}(\lambda) - \bar{D}(p,q)|}\, g(\lambda, p, q) \right)^{(I, F, I)} (\lambda, \sigma, q) \right)^{(I, F^{-1}, I)} (\lambda, p, q),$$

*i.e.*, we multiply the projection data $g(\lambda, p, q)$ with a weight function $\frac{r}{|\bar{S}(\lambda) - \bar{D}(p,q)|}$ and then perform a rampfiltering in the variable $p$. The final backprojection in (6.12) is computationally the most heavy part of the inversion algorithm. The major difference between this backprojection and all the previous is the weight function $A(\lambda, \bar{x})$. Now let $g(\lambda, p, q)$ be sampled at the points $g(\lambda_a, p_b, q_c)$ where, $r > 1$ and $N = 2^J$, with $J$ integer,

$$\begin{cases} \lambda_a = a\frac{\pi}{N} & a = 0, \ldots, 2N - 1 \\[2ex] p_b = b\frac{2}{N} & b = -\frac{N}{2}, \ldots, \frac{N}{2} \\[2ex] q_c = c\frac{2}{N} & c = -\frac{N}{2}, \ldots, \frac{N}{2} \end{cases}$$

and we want to estimate $f(\bar{x})$ in the points

$$\bar{x}_{k,l,m} = (x_k, y_l, z_m) = \left( \frac{2k}{N}, \frac{2l}{N}, \frac{2m}{N} \right),$$

$k, l$ and $m$ integers, for $k^2 + l^2 + m^2 \le \frac{N^2}{4}$. Thus

$$f(\bar{x}_{k,l,m})$$

$$\approx \frac{1}{4\pi N} \sum_{a=0}^{2N-1} A(\lambda_a, \bar{x}_{k,l,m})^2 G(\lambda_c, A(\lambda_a, \bar{x}_{k,l,m})\bar{x}_{k,l,m} \cdot \hat{p}(\lambda_a), A(\lambda_a, \bar{x}_{k,l,m})z_m),$$

where

$$A(\lambda_a, \bar{x}_{k,l,m}) = \frac{r}{r - x_k \cos\lambda_a - y_l \sin\lambda_a} = A(a, k, l)$$

and

$$\bar{x}_{k,l,m} \cdot \overset{\wedge}{p}(\lambda_a) = x_k \sin \lambda_a - y_l \cos \lambda_a = (\bar{x} \cdot \overset{\wedge}{p})(a, k, l).$$

If we now divide the sum into partial sums in the same way as we did in the sinogram case we get.

$$\sum_{a=(i-1)\cdot 2^j}^{i\cdot 2^j - 1} A(a, k, l)^2 G(\lambda_a, A(a, k, l)(\bar{x} \cdot \hat{p})(a, k, l), A(a, k, l)z_m).$$

Now if the interval is small, *i.e. j* small, we can make the approximation

$$A(a,k,l) \approx A(a_{j,i},k,l) \qquad\qquad (6.13)$$

where $a_{j,i} = i \cdot 2^j - (2^j + 1)/2$. the average angle. Thus

$$A(a_{j,i}, k, l)^2 \sum_{a=(i-1)\cdot 2^j}^{i\cdot 2^j - 1} G(\lambda_a, A(a_{j,i}, k, l)(\bar{x} \cdot \hat{p})(a, k, l), A(a_{j,i}, k, l)z_m).$$

Define

$$I(j, i, k, l, m) = \sum_{a=(i-1)\cdot 2^j}^{i\cdot 2^j - 1} G(\lambda_a, (\bar{x} \cdot \hat{p})(a, k, l), z_m).$$

Then as before

$$I(j,i,k,l,m) = I(j - 1, 2i - 1, k, l, m) + I(j - 1, 2i, k, l, m).$$

A partial sum is only determined in points where two projection lines, projected on the *xy*-plane, intersect one projection line coming from $\bar{S}(\lambda_{(i-1)\cdot 2^j})$ and the other from $\bar{S}(\lambda_{i\cdot 2^j-1})$, see Figure 6. Now since $A(\lambda, \bar{x})$ obviously can't be approximated by a constant for all $\lambda$, except $\bar{x} = 0$, the iteration process is stopped after a few steps, at level $j_0$, and the pixels are interpolated directly from the values of the partial sums at level $j_0$. We have

$$f(\bar{x}_{k,l,m})$$

$$\approx \frac{1}{4\pi N} \sum_{i=1}^{J+1-j_0} A(a_{j_0,i}, k, l)^2 I(j_0, i, A(a_{j_0,i}, k, l)k, A(a_{j_0,i}, k, l)l, A(a_{j_0,i}, k, l)m).$$

At a first glance the method seems to be far less efficient for this backprojection than for the previous ones. But if we consider that the level $j = 1$ reduces the number of summations by half and $j = 2$ to approximately a fourth of the original number, and so on, we see that it is almost as efficient as the other. The accuracy of the approximation (6.13) depends strongly on the distance between the point $(k, l)$ and the origin, *i.e.*, $\sqrt{k^2 + l^2}$. But since the inversion formula (6.12) is correct only for points in the plane $z = 0$ and the artifacts in the other planes $z = m$ increase with the absolute value of $m$ the region of interest usually is $\sqrt{k^2 + l^2 + m^2} \ll r$. For $(k, l)$ fixed point the accuracy of (6.13) depends on the angle difference $\lambda_{i\cdot 2^j-1} - \lambda_{(i-1)\cdot 2^j}$ not on the number of elements, $2^j$, in the partial sum.

$$\lambda_{i\cdot2^j-1} - \lambda_{(i-1)\cdot2^j} = \pi\,\frac{2^j-1}{N}$$

Hence if $N = 2^J$ corresponds to that the iteration process is stopped at level $j_0$ then $2N$ corresponds to that the iteration process is stopped at level $j_0+1$ in order to have the same accuracy for the approximation (6.13). Then if the region of interest consists of $n^3$ pixels the number of operations for the back-projection will be of the order $O(n^2 N \log N)$. In the two-dimensional case, fan-beam scanning, the procedure is identical, $m = 0$. Hence if the region of interest is of size $n^2$ the computational complexity will be $O(nN \log N)$.

Annex

Instead of using the approximation (6.13) we can even perform the multiplication of the weight function in an iterative way. In order to describe the main idea it suffices to study the two-dimensional case. $z \equiv 0$. the extension to the case $z \neq 0$ is obvious. We introduce the notations

$$\bar{x} = \begin{pmatrix} x \\ y \end{pmatrix} \in R^2,$$

$L(\lambda,p) = L(\lambda,p,0)$ and

$$I(j, i, \bar{x}) = \sum_{a=(i-1)\cdot2^J}^{i\cdot2^J-1} A(\lambda_a, \bar{x})^2 G(\lambda_a, A(\lambda_a, \bar{x})\bar{x}\cdot\hat{p}(\lambda_a)).$$

Let $\bar{x}(j,i,p_1,p_2)$ denote the point of intersection between the lines $L(\lambda_{(i-1)\cdot2^j}, 2p_1/N)$ and $L(\lambda_{i\cdot2^j-1}, 2p_2/N)$. Then we will use the notation

$$\bar{I}(j,i,p_1,p_2) = I(j,i,\bar{x}(j,i,p_1,p_2)).$$

We obtain a similar relation as (3.6)

$$\bar{I}(j,i,p_1,p_2) \approx \bar{I}(j-1, 2i-1, p_1, d_1) \div \bar{I}(j-1,2i,d_2,p_2),$$

where $d_1$ and $d_2$ are calculated in a similar way as equations (3.7) and (3.8) for $a_1$ and $b_1$. In general $d_1$ and $d_2$ will not be integers. In order to obtain the correct value of the weight function we will apply the following procedure. We will only consider the partial sum $\bar{I}(j-1,2i-1,p_1,d_1)$ the procedure for $\bar{I}(j-1,2i,d_2,p_2)$ is analogous. We start by only consider the term which corresponds to $\bar{a} = (i-1)\cdot2^j + 2^{j-1} - 1$, i.e.,

$$A(\bar{\lambda}_a, \bar{x}_1)^2 G(\bar{\lambda}_a, 2d_1/N)$$

$$\approx A(\bar{\lambda}_a, \bar{x}_1)^2 (c_1 G(\bar{\lambda}_a, 2[d_1]/N) + c_2 G(\bar{\lambda}_a, 2([d_1]+1)/N))$$

$$= c_1 \frac{A(\bar{\lambda}_a, \bar{x}_1)^2}{A(\bar{\lambda}_a, \bar{x}_2)^2} A(\bar{\lambda}_a, \bar{x}_2)^2 G(\bar{\lambda}_a, 2[d_1]/N)$$

$$+ c_2 \frac{A(\bar{\lambda}_a, \bar{x}_1)^2}{A(\bar{\lambda}_a, \bar{x}_3)^2} A(\bar{\lambda}_a, \bar{x}_3)^2 G(\bar{\lambda}_a, 2([d_1]+1)/N),$$

where $\bar{x}_1 = \bar{x}(j-1, 2i-1,p_1,d_1)$, $\bar{x}_2 = \bar{x}(j-1,2i-1,p_1,[d_1])$,

$\bar{x}_3 = \bar{x}(j - 1, 2i - 1, p_1, [d_1] + 1)$, $d_1 = [d_1] + c_2$, $0 \leq c_2 < 1$ and $c_1 + c_2 = 1$. Therefore we will use the following approximation

$$\bar{I}(j - 1, 2i - 1, p_1, d_1) \approx c_1 \frac{A(\lambda_{\bar{a}}, \bar{x}_1)^2}{A(\lambda_{\bar{a}}, \bar{x}_2)^2} \bar{I}(j-1, 2i - 1, p_1, [d_1])$$

$$+ c_2 \frac{A(\lambda_{\bar{a}}, \bar{x}_1)^2}{A(\lambda_{\bar{a}}, \bar{x}_3)^2} \bar{I}(j - 1, 2i - 1, p_1, [d_1] + 1),$$

where $\bar{a} = (i - 1) \cdot 2^j + 2^{j-1} - 1$. In order for the approximation to be accurate for all terms in the partial sum $\bar{I}(j - 1, 2i - 1, p_1, d_1)$ all weight functions which belong to the partial sum have to satisfy the condition

$$\frac{A(\lambda_{a1}, \bar{x}(j - 1, 2i - 1, p_1, d_1))^2}{A(\lambda_{a1}, \bar{x}(j - 1, 2i - 1, p_1, d))^2} \approx \frac{A(\lambda_{a1}, \bar{x}(j - 1, 2i - 1, p_1, d_1))^2}{A(\lambda_{a1}, \bar{x}(j - 1, 2i - 1, p_1, d))^2},$$

for $(i-1) \cdot 2^j \leq a1, a2 \leq (i - 1) \cdot 2^j + 2^{j-1} - 1$ and $[d_1] \leq d \leq [d_1]+1$. The error obtains its maximum when $a1 = (i - 1) \cdot 2^j$ and $a2 = (i - 1) 2^j + 2^{j-1} - 1$. It suffices to consider the case

$$\frac{A(0, \bar{x}(j - 1, 1, p_1, d_1))^2}{A(0, \bar{x}(j - 1, 1, p_1, d))^2} \approx \frac{A(\lambda, \bar{x}(j - 1, 1, p_1, d_1))^2}{A(\lambda, \bar{x}(j - 1, 1, p_1, d))^2},$$

for $i = 1$ and $\lambda = 2^{j-1} - 1$. The points $\bar{x}(j - 1, 1, p_1, d_1)$ and $\bar{x}(j - 1, 1, p_1, d)$ are located on the line $L(0, 2p_1/N)$ which can be written

$$\bar{x}(t) = \frac{2t}{N}\begin{pmatrix} 0 \\ p_1 \end{pmatrix} + (1 - t)\begin{pmatrix} r \\ 0 \end{pmatrix} \quad t \in R.$$

Let $\bar{x}(j - 1, 1, p_1, d_1) = \bar{x}(t_1)$ and $\bar{x}(j - 1, 1, p_1, d) = \bar{x}(t)$. Then

$$A(0, \bar{x}(t_1)) = \frac{1}{t_1} \text{ and } A(0, \bar{x}(t)) = \frac{1}{t}.$$

We have

$$\frac{A(\lambda, \bar{x}(t_1))}{A(\lambda, \bar{x}(t))} = \frac{r - (1 - t)r\cos\lambda - tp_1\frac{2}{N}\sin\lambda}{r - (1 - t_1)r\cos\lambda - t_1 p_1\frac{2}{N}\sin\lambda}$$

$$= \frac{t}{t_1}\frac{1 + \left(\frac{1-t}{t}\right)(1 - \cos\lambda) - \frac{2p_1}{r\cdot N}\sin\lambda}{1 + \left(\frac{1-t_1}{t_1}\right)(1 - \cos\lambda) - \frac{2p_1}{r\cdot N}\sin\lambda} \approx \frac{t}{t_1} = \frac{A(0, \bar{x}(t_1))}{A(0, \bar{x}(t))}.$$

The number of points of intersection increase with $\lambda$. In fact we have $|t_1 - t| \propto \frac{1}{N \sin\lambda}$. Hence

$$\left|\left(\frac{1 - t}{t} - \frac{1 - t_1}{t_1}\right)(1 - \cos\lambda)\right| \leq \frac{c(1 - \cos\lambda)}{N\sin\lambda} = \frac{c\sin\lambda}{N(1 + \cos\lambda)},$$

for some constant $c$. At the first steps of the iteration the error will be extremely small $\propto 1/N^2$ and then increase to $\propto 1/N$ at the final step.

Now we return to the three-dimensional case, $z \neq 0$. We introduce the notations

$$I(j, i, \bar{x}, z) = \sum_{a=(i-1) \cdot 2^j}^{i \cdot 2^j - 1} A(\lambda_a, \bar{x})^2 G(\lambda_a, A(\lambda_a, \bar{x})\bar{x} \cdot \hat{p}(\lambda_a), A(\lambda_a, \bar{x})z)$$

and

$$\bar{I}(j,i,p_1,p_2,z) = I(j,i,\bar{x}(j,i,p_1,p_2),z).$$

We have the relation

$$\bar{I}(j,i,p_1,p_2,z) \approx \bar{I}(j-1,2i-1,p_1,d_1,z) + \bar{I}(j-1,2i,d_2,p_2,z),$$

We will use the same approximation as before the only difference is that we have to adjust the value of the variable $z$.

$$\bar{I}(j-1,2i-1,p_1,d_1,z) \approx c_1 \frac{A(\bar{\lambda}_a, \bar{x}_1)^2}{A(\bar{\lambda}_a, \bar{x}_2)^2} \bar{I}(j-1,2i-1,p_1,[d_1],z_1)$$

$$+ c_2 \frac{A(\bar{\lambda}_a, \bar{x}_1)^2}{A(\bar{\lambda}_a, \bar{x}_3)^2} \bar{I}(j-1,2i-1, p_1, [d_1]+1, z_2),$$

where $\bar{a} = (i-1) \cdot 2^j + 2^{j-1} - 1$, $\bar{\lambda} = (i-1) \cdot 2^j + (2^{j-1} -1)/2$ the average angle and

$$z \cdot A(\bar{\lambda},\bar{x}_1) = z_1 \cdot A(\bar{\lambda},\bar{x}_2) = z_2 \cdot A(\bar{\lambda},\bar{x}_3).$$

In general $z_1$ and $z_2$ are not integers but since the weight function and the points of intersection $\bar{x}_2$ and $\bar{x}_3$ are independent of $z$ we can perform an interpolation of the variable $z$ in the usual way. The accuracy of the approximation in the $z$-direction depends on the previous condition. *i.e.*,

$$\frac{A(\bar{\lambda}, \bar{x}_1)}{A(\bar{\lambda}, \bar{x}_2)} \approx \frac{A(\lambda_a, \bar{x}_1)}{A(\lambda_a, \bar{x}_2)} \text{ and } \frac{A(\bar{\lambda}, \bar{x}_1)}{A(\bar{\lambda}, \bar{x}_3)} \approx \frac{A(\lambda_a, \bar{x}_1)}{A(\lambda_a, \bar{x}_3)}$$

for $(i-1) \cdot 2^j \leq a \leq (i-1) \cdot 2^j + 2^{j-1} - 1$.

**Claims**

1. A computer tomography method for obtaining a mapping of a variable in an object, said variable being measured in the form of line integral values over a multitude of lines, crossing said object, the multitude of measured lines being subdivided into families of lines, which families are enumerable in an order determined by successive relative angular shifts between patterns of lines in successive families, comprising the steps of

    a) in a first step, groups are combined out of said families, each group consisting of a first prime number of families of lines having adjacent positions in said order, said lines of said highest and lowest order of families forming a multitude of intersection points between lines belonging to one family and lines belonging to another family, and calculating for each of said intersection points of the sum of the line integral values for the two respective said lines intersecting at that point, and further adding values interpolated to said points from eventual intermediate families, said first step resulting, for each said group of families, in a plurality of points in a plane, for which points individual sum values are stored, said sums forming space distributions, one for each said group,

b) in a successive step combining a further prime number of previously combined groups. with their calculated space distributions, representative of adjacent positions in said order into further groups representative of a number of families which is said further prime number times that of an immediately preceding step, having successive positions in said order, and calculating for points of intersection between those lines belonging to the families of the lowest and highest order within the number of families comprised in each combined group, of sums of values representative of the two respective space distributions, and summing thereto values for the aforesaid points of intersection taken for distributions belonging to eventual intermediate groups, either for points coinciding with those having calculated individual sums using such sums, or, for points not so coinciding, adding values interpolated from adjacent points in a respective space distribution, forming in said successive step higher order space distributions, to a number which is reduced by the factor of said further number compared to that of the starting point of said successive step,

c) and repeating said second step until obtention of a final space distribution.

**2.** A computer tomography method of claim 1, **characterized in that** said interpolations are performed by linear interpolation of values belonging to points of intersection regarding a line participating in a respective intersection point, for which an interpolated value is desired.

**3.** A computer tomography method of claim 1, **characterized in that** said interpolations are performed taking into account neighbour distribution points in the plane, belonging to more than one line.

**4.** A computer tomography method of claim 1, **characterized in that** said first prime number is 2.

**5.** A computer tomography method of claim 4, **characterized in that** each said further prime number is 2.

**6.** A computer tomography method of claim 5, wherein each family of lines consists of lines which are mutually parallel, **characterized in that** the last repeated second step is performed by two combined groups, symmetrized in relation to a direction at right angles to an angle belonging to a family of lines which is at an extreme end of said enumerable order, thus obtaining a set of sum values which correspond to pixels in a cartesian system of screen pattern.

**7.** A computer tomograph having a plurality of detectors for sensing intensities along a multitude of lines, some of which are intersecting each other, said lines intersecting an object to be tomographed, said plurality of detectors being connected to a calculator for calculating pixel values for the intersected object, **characterized in that** the said calculator is provided with means for carrying out each of the method steps specified in claim 1.

**Patentansprüche**

**1.** Computertomografieverfahren zum Erhalten einer Abbildung einer Variablen in ein Objekt, wobei die Variable in Form von Linienintegralwerten über eine Vielzahl von das Objekt schneidenden Linien gemessen wird, wobei die Vielzahl von gemessenen Linien unterteilt wird in Familien von Linien, welche Familien zählbar sind in einer Reihefolge, die durch sukzessives relatives Winkelverschieben zwischen Mustern von Linien in sukzessiven Familien bestimmt wird,
die folgenden Schritte umfassend:

a) in einem ersten Schritt werden Gruppen aus den Familien kombiniert, wobei jede Gruppe aus einer ersten Primzahl von Familien der Linien mit benachbarten Positionen in dieser Reihenfolge besteht, wobei die Linien der höchsten und niedrigsten Ordnung von Familien eine Vielzahl von Schnittpunkten zwischen Linien bilden, die zu einer Familie gehören und Linien, die zu einer anderen Familie gehören und berechnen für jeden der Schnittpunkte der Summe der Linienintegralwerte für die beiden jeweiligen an dem Punkt sich schneidenden Linien und außerdem Addieren von Werten, die zu den Punkten interpoliert sind von eventuellen Zwischenfamilien, wobei der erste Schritt für jede der Gruppen von Familien in einer Vielzahl von Punkten in einer Ebene resultiert, für welche Punkte individuelle Summenwerte gespeichert sind, wobei die Summen Raumverteilungen bilden, eine für jede der Gruppen,

b) in einem nachfolgenden Schritt Kombinieren einer weiteren Primzahl von zuvor kombinierten Gruppen mit ihren berechneten Raumverteilungen, die benachbarte Positionen in der Reihenfolge repräsentieren in weitere Gruppen, die eine Anzahl von Familien repräsentieren, die die weitere Primzahl mal der des unmittelbar vorangegangenen Schrittes ist, mit sukzessiven Positionen in der Reihenfolge und für jeden Schnittpunkt zwischen diesen Linien, die zu den Familien der niedrigsten und höchsten Ordnung innerhalb der Zahl von Familien gehören, die in jeder kombinierten Gruppe enthalten sind, Berechnen der Summen von Werten, die die beiden jeweiligen Raumverteilungen repräsentieren und Summieren von Werten der zuvor erwähnten Schnittpunkte dazu, die genommen wurden für die zu eventuellen Zwischengruppen gehörenden Verteilungen, entweder für mit diesen koinzidierenden Punkten mit berechneten individuellen Summen unter Verwendung solcher Summen, oder für nichtkoinzidierende Punkte Addieren von interpolierten Werten von benachbarten Punkten in einer jeweiligen Raumverteilung, in dem sukzessiven Schritt Raumverteilungen höherer Ordnung bildend, zu einer Zahl, die vermindert ist, um den Faktor der weiteren Zahl verglichen mit der des Startpunktes des sukzessiven Schrittes,

c) und Wiederholen des zweiten Schrittes bis eine letztendliche Raumverteilung erreicht wird.

2. Computertomografieverfahren nach Anspruch 1, **dadurch gekennzeichnet, dass** die Interpolation durch Linearinterpolation von Werten durchgeführt wird, die zu Schnittpunkten gehören bezüglich einer an dem jeweiligen Schnittpunkt teilhabenden Linie, für die ein interpolierter Wert erwünscht ist.

3. Computertomografieverfahren nach Anspruch 1, **dadurch gekennzeichnet, dass** die Interpolation durchgeführt werden unter Berücksichtigung von Nachbarverteilungspunkten in der Ebene, die zu mehr als einer Linie gehören.

4. Computertomografieverfahren nach Anspruch 1, **dadurch gekennzeichnet, dass** die erste Primzahl 2 ist.

5. Computertomografieverfahren nach Anspruch 1, **dadurch gekennzeichnet, dass** die weitere Primzahl 2 ist.

6. Computertomografieverfahren nach Anspruch 5, wobei jede Familie von Linien aus Linien besteht, die zueinander parallel sind, **dadurch gekennzeichnet, dass** der letzte wiederholte zweite Schritt durchgeführt wird durch zwei kombinierte Gruppen, die zu einer Richtung in einem rechten Winkel zu einem zu einer Familie von Linien gehörenden Winkel, der an einem extremen Ende der zählbaren Reihenfolge ist, symmetriert ist, dadurch einen Satz von Summenwerten erhaltend, die Pixels in einem kartesischen System von Schirmmustern entsprechen.

7. Computertomograf mit einer Vielzahl von Detektoren zum Erfassen von Intensitäten entlang einer Vielzahl von Linien, von denen einige einander schneiden, wobei die Linien ein zu tomografierendes Objekt schneiden, wobei die Vielzahl von Detektoren mit einem Rechner verbunden ist zum Berechnen von Pixelwerten für das geschnittene Objekt, **dadurch gekennzeichnet, dass** der Rechner mit einer Vorrichtung versehen ist zum Ausführen jedes der Verfahrensschritte, die in Anspruch 1 spezifiziert sind.

**Revendications**

1. Procédé de tomographie informatisée pour obtenir une application d'une variable dans un objet, ladite variable étant mesurée sous la forme de valeurs d'intégrales de ligne sur une multitude de lignes, coupant ledit objet, la multitude de lignes mesurées étant subdivisée en familles de lignes, lesquelles familles sont dénombrables dans un ordre déterminé par des décalages angulaires relatifs entre motifs de lignes dans les familles successives, comprenant les étapes consistant à :

a) dans une première étape, on constitue des groupes à partir desdites familles, chaque groupe étant constitué d'un premier nombre premier de familles de lignes ayant des positions adjacentes dans ledit ordre, lesdites lignes desdites familles d'ordre le plus élevé et d'ordre le plus bas formant une multitude de points d'intersection entre les lignes appartenant à une famille et les lignes appartenant à une autre famille, et on calcule pour chacun desdits points d'intersection la somme des valeurs d'intégrales de ligne pour les deux dites lignes respectives se coupant en ce point, et l'on ajoute en outre les valeurs interpolées auxdits points à partir d'éventuelles familles intermédiaires, ladite première étape résultant, pour chacun desdits groupes de familles, en une pluralité de points dans un plan, des valeurs de sommes individuelles étant mémorisées pour lesdits points, lesdites sommes formant des distributions spatiales, une pour chacun desdits groupes,
b) dans une étape suivante, combiner un nombre premier supplémentaire de groupes précédemment combinés, avec leurs distributions spatiales calculées, représentatifs de positions adjacentes dans ledit ordre en des groupes supplémentaires représentatifs d'un nombre de familles qui est ledit nombre premier supplémentaire fois celui d'une étape immédiatement précédente, ayant des positions successives dans ledit ordre, et calculer pour les points d'intersection entre les lignes appartenant aux familles d'ordre le plus bas et d'ordre

**EP 0 928 458 B1**

le plus élevé dans le nombre de familles comprises dans chaque groupe combiné, les sommes des valeurs représentatives des deux distributions spatiales respectives, et leur ajouter les valeurs pour les points d'intersection susmentionnés prises pour les distributions appartenant à d'éventuels groupes intermédiaires, soit pour les points coïncidant avec ceux ayant des sommes individuelles calculées en utilisant ces sommes, soit pour les points qui ne coïncident pas, en ajoutant des valeurs interpolées à partir de points adjacents dans une distribution spatiale respective, en formant dans ladite étape suivante des distributions spatiales d'ordre supérieur, à un nombre qui est réduit par le facteur dudit nombre supplémentaire comparé à celui du point de départ de ladite étape suivante,

c) et répéter ladite deuxième étape jusqu'à l'obtention d'une distribution spatiale finale.

2. Procédé de tomographie informatisée selon la revendication 1, **caractérisé en ce que** lesdites interpolations sont réalisées par interpolation linéaire de valeurs appartenant à des points d'intersection concernant une ligne participant à un point d'intersection respectif, pour lequel une valeur interpolée est souhaitée.

3. Procédé de tomographie informatisée selon la revendication 1, **caractérisé en ce que** lesdites interpolations sont réalisées en prenant en compte les points de distribution voisins dans le plan qui appartiennent à plus d'une ligne.

4. Procédé de tomographie informatisée selon la revendication 1, **caractérisé en ce que** ledit premier nombre premier est 2.

5. Procédé de tomographie informatisée selon la revendication 4, **caractérisé en ce que** chacun desdits nombres premiers supplémentaires est 2.

6. Procédé de tomographie informatisée selon la revendication 5, dans lequel chaque famille de lignes est constituée de lignes qui sont mutuellement parallèles, **caractérisé en ce que** la dernière deuxième étape répétée est réalisée par deux groupes combinés, symétrisés par rapport à une direction à angle droit avec un angle appartenant à une famille de lignes qui est à un bout extrême dudit ordre dénombrable, obtenant ainsi un ensemble de valeurs de somme qui correspondent à des pixels dans un système cartésien de motif d'écran.

7. Tomographe informatisé comportant une pluralité de détecteurs pour mesurer des intensités le long d'une multitude de lignes, certaines d'entre elles se coupant, lesdites lignes coupant un objet à analyser par tomographie, ladite pluralité de détecteurs étant connectés à un calculateur pour calculer des valeurs de pixel pour l'objet intersecté, **caractérisé en ce que** ledit calculateur est muni d'un moyen permettant d'exécuter chacune des étapes de procédé spécifiées dans la revendication 1.

$$\sum_{n=1}^{8}$$

$$\sum_{n=1}^{4}$$

$$\sum_{n=5}^{8}$$

$$\sum_{n=1}^{2}$$

$$\sum_{n=3}^{4}$$

$$\sum_{n=5}^{6}$$

$$\sum_{n=7}^{8}$$

$n=1$     $n=2$     $n=3$     $n=4$     $n=5$     $n=6$     $n=7$     $n=8$

FIG.1

FIG.2

FIG.3

FIG.4

FIG. 5

FIG.6